# FASCICULE DE BREVET EUROPEEN

(11) **EP 3 149 433 B1**
(45) Date de publication et mention de la délivrance du brevet: **06.06.2018**
(21) Numéro de dépôt: 15725758.5
(22) Date de dépôt: 17.04.2015
(51) Int. Cl.: F16M 13/02, G03B 17/56, G01D 11/24, B60R 11/04, B60R 11/00

(54) **AGENCEMENT DE MONTAGE D'UN ORGANE FONCTIONNEL TEL QU'UNE CAMERA SUR UN ELEMENT DE CARROSSERIE D'UN VEHICULE AUTOMOBILE**
ANORDNUNG ZUM BEFESTIGEN EINER FUNKTIONALEN GERÄT WIE EINE KAMERA AUF EINEM KÖRPERTEIL EINES AUTOS
ARRANGEMENT FOR MOUNTING A FUNCTIONAL DEVICE SUCH AS A CAMERA ON A BODY PART OF A CAR

(30) Priorité: 02.06.2014 FR 1454971
(43) Date de publication de la demande: 05.04.2017
(73) Titulaire: Renault S.A.S., 92100 Boulogne-Billancourt (FR)
(72) Inventeur: PEROT, Patrick, 78960 Voisins le Bretonneux (FR); MICHAUD, Herve, 28000 Chartres (FR); GODIN, Damien, 78160 Marly le Roi (FR)
(86) Numéro de dépôt international: PCT/FR2015/051058
(87) Numéro de publication internationale: WO 2016/001497

(56) Documents cités:
- EP-A1- 2 722 234
- DE-A1-102004 037 257
- DE-U1-202011 052 546

## Description

### Domaine de l'invention :

La présente invention concerne un agencement de montage d'un organe fonctionnel, tel qu'une caméra, sur un élément de carrosserie d'un véhicule automobile, comprenant un enjoliveur clippé sur l'élément de carrosserie et pourvu d'un rebord extérieur en appui sur une face extérieure de l'élément de carrosserie, l'agencement comprenant également un support sur lequel est fixé l'organe fonctionnel, le support étant clippé sur l'enjoliveur.

### Etat de la technique et problème posé :

Les caméras de recul équipant certains véhicules sont généralement fixées sur la porte de coffre arrière du véhicule. D'autres implantations de la caméra sont recherchées, notamment sur le bouclier arrière du véhicule, qui est une pièce de carrosserie susceptible de se déformer, notamment sous l'effet de petits chocs et de présenter des dispersions géométriques non négligeables. Ceci pose cependant des difficultés de positionnement et de tenue géométrique. La caméra et son boitier doivent résister aux petits chocs subis par le bouclier, sans pour autant que les fonctionnalités de la caméra soient altérées. DE102004037257 A1 décrit un agencement de montage d'un organe fonctionnel sur un élément de carrosserie d'un véhicule automobile selon la revendication 1.

### But de l'invention :

L'invention a pour but de pallier tout ou partie des inconvénients précédents en proposant un agencement de montage astucieux de l'invention sur le bouclier du véhicule.

### Objet de l'invention :

A cet effet, l'invention a pour objet un agencement de montage d'un organe fonctionnel sur un élément de carrosserie d'un véhicule automobile, comprenant un enjoliveur clippé sur l'élément de carrosserie et pourvu d'un rebord extérieur en appui sur une face extérieure de l'élément de carrosserie, l'agencement comprenant également un support sur lequel est fixé l'organe fonctionnel, le support étant clippé sur l'enjoliveur, caractérisé en ce que le support comprend un bossage central sur lequel est fixé l'organe fonctionnel, ce bossage étant introduit dans un logement de l'enjoliveur de façon à disposer l'organe fonctionnel en vis-à-vis d'une ouverture ménagée dans une paroi de fond de l'enjoliveur, le support comprenant également une conformation en cuvette à l'intérieur de laquelle est situé le bossage, des bords périphériques de la conformation en cuvette étant avancés pour coopérer en contact avec une face intérieure de l'élément de carrosserie.
Ainsi la conformation en cuvette confère une base élargie au support de la caméra offrant des zones d'appui plus étendues entre le support et l'élément de carrosserie, de façon à plaquer ce support au mieux contre une face intérieure de l'élément de carrosserie et à lui donner un maximum de stabilité en limitant les dispersions géométriques.

Selon d'autres caractéristiques avantageuses de l'invention :
- le support comporte une gorge délimitée intérieurement par le bossage central et extérieurement par les bords périphériques, cette gorge accueillant un bord libre de l'enjoliveur,
- les bords périphériques se prolongent dans la direction opposée à la face intérieure de l'élément de carrosserie par des parois extérieures s'étendant de façon sensiblement perpendiculaire à la face intérieure de l'élément de carrosserie,
- la direction d'introduction du bossage central du support dans le logement de l'enjoliveur est inclinée d'un angle compris entre 30 et 60° par rapport à la face intérieure de l'élément de carrosserie sur laquelle coopèrent en contact les bords périphériques du support,
- l'organe fonctionnel est une caméra,
- l'enjoliveur et le support sont des pièces réalisées en matière plastique,
- l'élément de carrosserie est un bouclier d'un véhicule automobile, notamment un bouclier arrière.
L'invention a également pour objet un véhicule automobile comprenant un agencement ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente un agencement classique de montage d'un organe fonctionnel sur un élément de carrosserie selon l'art antérieur,
- la figure 2 représente une vue en perspective avec une coupe suivant un plan vertical longitudinal de l'agencement selon l'invention,
- la figure 3 représente une vue en perspective avec une coupe suivant un plan transversal de l'agencement selon l'invention,
- la figure 4 représente une vue en perspective de l'agencement selon l'invention depuis l'extérieur du bouclier et vers l'avant du véhicule, et
- la figure 5 représente une vue en perspective de l'agencement selon l'invention depuis l'intérieur du bouclier et vers l'arrière du véhicule,

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.
Les notions avant-arrière s'entendent par rapport au sens de marche normal du véhicule qui est dirigé vers l'avant.
Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admise dans le cadre de l'invention.

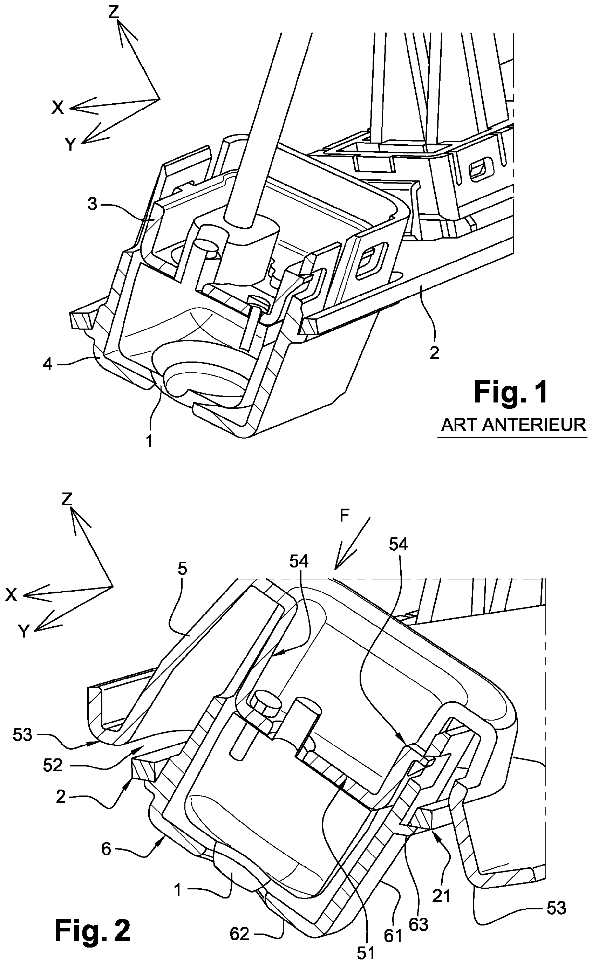

On a représenté à la figure 1 un agencement connu de montage d'un organe fonctionnel 1 sur un élément de carrosserie 2 d'un véhicule automobile. L'organe fonctionnel 1 est typiquement une caméra montée sur un support 3, lequel est fixé sur un enjoliveur 4 monté solidairement sur l'élément de carrosserie 2 qui est dans l'exemple illustré un bouclier arrière du véhicule. La caméra est maintenue sur le support 3 au moyen de vis de fixation. On conservera dans la suite de l'exposé les termes « organe fonctionnel » et « élément de carrosserie » étant entendu qu'ils peuvent parfaitement être remplacés par « caméra » et « bouclier arrière » dans l'exemple de réalisation illustré, mais peuvent également recouvrir d'autres notions, par exemple un radar ou un bouclier avant etc. L'enjoliveur 4 assure une fonction esthétique autour de l'organe fonctionnel 1 mais constitue de fait également une pièce d'interface ou un support bis assurant le maintien de l'organe fonctionnel 1 et de son support 3 sur l'élément de carrosserie 2. Dans l'agencement de l'art antérieur, le support 3 a une forme compacte complètement insérée dans un évidement de l'enjoliveur 4. Des moyens de clippage élastiques assurent la fixation du support 3 et de l'organe fonctionnel 1 sur l'enjoliveur. La mise en référence géométrique de l'ensemble par rapport à l'élément de carrosserie 2 est assurée uniquement via un rebord ménagé sur les parois extérieures de l'enjoliveur 4, ce rebord formant un épaulement prenant appui sur une face extérieure de l'élément de carrosserie. Ce rebord a la forme générale d'une nervure conformée autour du corps globalement parallépipédique de l'enjoliveur 4.
L'invention illustrée aux figures 2 à 5 inclut également un support 5 sur lequel est montée l'organe fonctionnel 1, un enjoliveur 6 sur lequel est monté le support 5 et l'organe fonctionnel 1, ainsi que l'élément de carrosserie 2 sur lequel est fixé l'ensemble. L'élément de carrosserie 2, l'organe fonctionnel 1 ainsi que l'enjoliveur sont identiques à ceux de l'état de l'art selon la figure 1.

L'enjoliveur 6 a une forme générale parallépipédique délimitée par des parois latérales 61 et une paroi de fond 62. La paroi de fond 62 comporte une ouverture au travers de laquelle l'organe fonctionnel 1, typiquement une caméra préalablement introduite dans un logement intérieur de l'enjoliveur 6, peut accéder à un champ de vision situé ici à l'arrière du véhicule. A l'opposé de la paroi de fond 62, l'enjoliveur 6 comporte une ouverture au travers de laquelle l'organe fonctionnel 1 est inséré dans l'enjoliveur 6 suivant la flèche F (figure 2). L'enjoliveur 6 a une section transversale ayant une forme générale carrée, si l'on considère une section perpendiculaire à la direction de la flèche F.

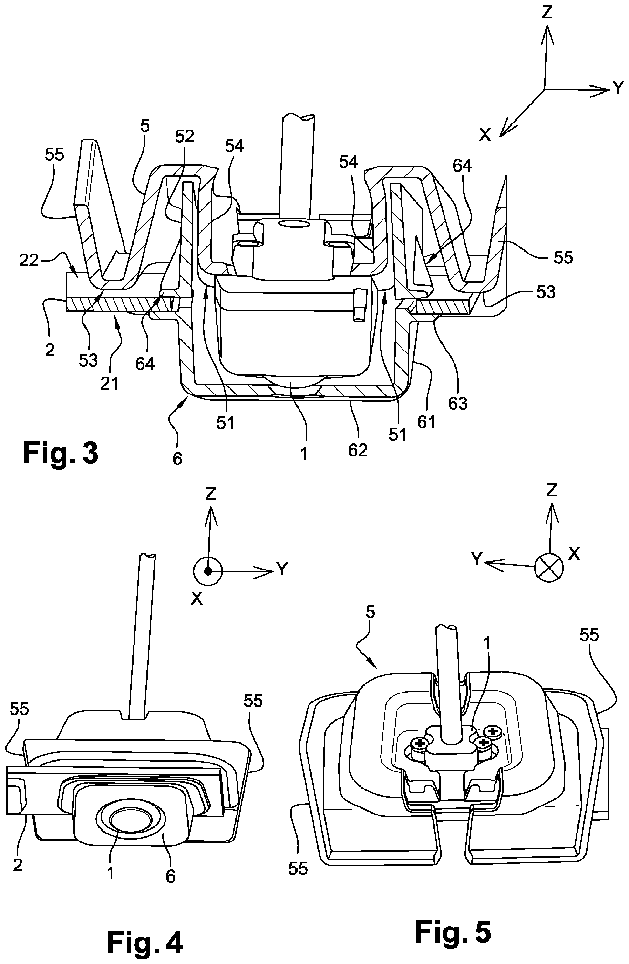

L'enjoliveur 6 comprend un rebord extérieur 63 ayant la forme d'une nervure qui s'étend sur les faces extérieures des parois latérales 61. Ce rebord 63 constitue un épaulement ayant une face d'appui plane destinée à coopérer en contact avec une face extérieure 21 de l'élément de carrosserie 2. En référence à la figure 3, l'enjoliveur 6 comprend des pattes élastiques 64 coopérant en contact avec le bord d'une ouverture ménagée dans l'élément de carrosserie 2, de façon à déformer les pattes vers l'intérieur de l'enjoliveur et autoriser leur passage. Les pattes élastiques 64 reprennent leur position initiale en butée contre une face intérieure 22 de l'élément de carrosserie 2 lorsque le rebord 63 est en appui sur l'élément de carrosserie. L'enjoliveur 6 est ainsi maintenu verrouillé sur l'élément de carrosserie 2.

L'agencement selon l'invention comprend également un support 5 sur lequel est fixé l'organe fonctionnel. Le support 5 comprend un bossage central 51 sur lequel est fixé l'organe fonctionnel 1 au moyen d'une ou plusieurs vis. Le bossage 51 est introduit dans le logement interne de l'enjoliveur 6 de façon à disposer l'organe fonctionnel 1 en vis-à-vis de la paroi de fond 62 de l'enjoliveur 6. Le support 5 comprend une conformation en cuvette 52 à l'intérieur de laquelle est situé le bossage 51. La conformation en cuvette 52 comprend des bords périphériques 53 qui sont avancés pour coopérer en contact avec une face intérieure 22 de l'élément de carrosserie 2. On note que le bossage 51 du support 5 comporte des parois latérales 54 qui sont clippées sur les parois latérales 61 par un système de pattes élastiques du même type que précité (figures 2, 3).

La direction d'introduction du bossage central 51 du support 5 dans le logement de l'enjoliveur 6 est inclinée d'un angle compris entre 30° et 60°, par exemple 45° par rapport à au plan de la face intérieure 22 de l'élément de carrosserie 2 sur laquelle coopère en contact les bords périphériques 53 du support 5.

Compte tenu de la présence du bossage 51 au milieu de la conformation en cuvette 52, le support 5 présente une gorge délimitée intérieurement par le bossage central 51 et extérieurement par les bords périphériques 53. Cette gorge accueille un bord libre de l'enjoliveur 6 qui délimite l'ouverture par laquelle le bossage 51 et l'organe fonctionnel 1 sont insérés dans le logement de l'enjoliveur 6.

Les bords périphériques 53 se prolongent dans la direction opposée à la face intérieure 22 de l'élément de carrosserie 2 par des parois extérieures 55 qui s'étendent de façon sensiblement perpendiculaire à la face intérieure 22 de l'élément de carrosserie 2. Ces parois extérieures 55, combinées à la conformation en cuvette 52 et au bossage central 51 du support 5 contribuent par leur disposition en S à rigidifier le support sur lequel est fixé rigidement l'organe fonctionnel.

Les bords périphériques 53 du support 5 comportent une partie avancée sensiblement plane qui coopère en contact avec la face intérieure 22 de l'élément de carrosserie 2. Cette zone de contact des bords périphériques 53 constituent une base d'appui disposée tout autour de l'organe fonctionnel 1 et à distance de celui-ci, ce qui contribue fortement à la mise en position géométrique de l'organe fonctionnel 1 par rapport à l'élément de carrosserie 2. La distance entre l'axe central de l'organe fonctionnel 1 et la zone de contact des bords périphériques 53 est typiquement comprise entre 30 et 60 mm.

Les parois extérieures 55 du support 5 peuvent également constituer des éléments formant entretoise en appui sur des éléments internes (non représentés) de l'élément de carrosserie ou de la structure du véhicule. Ainsi ces éléments sollicités en compression suivant la direction axiale du véhicule ménagent un volume de sécurité pour l'organe fonctionnel en évitant qu'il soit écrasé et endommagé lors d'un choc.

L'enjoliveur 6 et le support 5 sont des pièces réalisées en matière plastique, par exemple et non limitativement par injection. Leur épaisseur est de comprise entre 1 et 5 mm. L'élément de carrosserie 2 est également typiquement réalisé en matière plastique.

## Revendications

1. Agencement de montage d'un organe fonctionnel (1) sur un élément de carrosserie (2) d'un véhicule automobile, comprenant un enjoliveur (6) pourvu d'un rebord extérieur (63) en appui sur une face extérieure (21) de l'élément de carrosserie (2), l'agencement comprenant également un support (5) sur lequel est fixé l'organe fonctionnel (1), le support (5) étant clippé sur l'enjoliveur (6), le support (5) comprenant un bossage central (51) sur lequel est fixé l'organe fonctionnel (1), ce bossage (51) étant introduit dans un logement de l'enjoliveur (6) de façon à disposer l'organe fonctionnel (1) en vis-à-vis d'une ouverture ménagée dans une paroi de fond (62) de l'enjoliveur (6), le support (5) comprenant également une conformation en cuvette (52) à l'intérieur de laquelle est situé le bossage (51), des bords périphériques (53) de la conformation en cuvette (52) étant avancés pour coopérer en contact avec une face intérieure (22) de l'élément de carrosserie (2), **caractérisé en ce que** l'enjoliveur (6) est clippé sur l'élément de carrosserie (2) et le support (5) comporte une gorge délimitée intérieurement par le bossage central (51) et extérieurement par les bords périphériques (53), cette gorge accueillant un bord libre de l'enjoliveur (6), les bords périphériques (53) se prolongeant dans la direction opposée à la face intérieure (22) de l'élément de carrosserie (2) par des parois extérieures (55) s'étendant de façon sensiblement perpendiculaire à la face intérieure (22) de l'élément de carrosserie (2).

2. Agencement selon la revendication 1, **caractérisé en ce que** la direction d'introduction (F) du bossage central (51) du support (5) dans le logement de l'enjoliveur (6) est inclinée d'un angle compris entre 30° et 60° par rapport à la face intérieure (22) de l'élément de carrosserie (2) sur laquelle coopèrent en contact les bords périphériques (53) du support (5).

3. Agencement selon l'une quelconque des revendications précédentes, **caractérisé en ce que** l'organe fonctionnel (1) est une caméra.

4. Agencement selon l'une quelconque des revendications précédentes, **caractérisé en ce que** l'enjoliveur (6) et le support (5) sont des pièces réalisées en matière plastique.

5. Agencement selon l'une quelconque des revendications précédentes, **caractérisé en ce que** l'élément de carrosserie (2) est un bouclier d'un véhicule automobile, notamment un bouclier arrière.

6. Véhicule automobile, **caractérisé en ce qu'**il comprend un agencement selon l'une quelconque des revendications précédentes.

## Patentansprüche

1. Anordnung zur Montage eines Funktionsorgans (1) auf ein Karosserieteil (2) eines Kraftfahrzeugs, das eine Zierblende (6) enthält, die mit einer äußeren Randleiste (63) in Auflage auf einer Außenseite (21) des Karosserieteils (2) versehen ist, wobei die Anordnung ebenfalls einen Träger (5) enthält, an dem das Funktionsorgan (1) befestigt ist, wobei der Träger (5) auf die Zierblende (6) eingeklinkt ist, wobei der Träger (5) einen mittleren Nocken (51) enthält, an dem das Funktionsorgan (1) befestigt ist, wobei dieser Nocken (51) in eine Aufnahme der Zierblende (6) eingeführt wird, um das Funktionsorgan (1) gegenüber einer Öffnung anzuordnen, die in einer Bodenwand (62) der Zierblende (6) ausgespart ist, wobei der Träger (5) ebenfalls eine Schalenausbildung (52) enthält, in deren Innerem sich der Nocken (51) befindet, wobei Umfangsränder (53) der Schalenausbildung (52) vorgeschoben sind, um in Kontakt mit einer Innenseite (22) des Karosserieteils (2) zusammenzuwirken, **dadurch gekennzeichnet, dass** die Zierblende (6) auf das Karosserieteil (2) eingeklinkt ist und der Träger (5) eine Rille aufweist, die innen vom mittleren Nocken (51) und außen von den Umfangsrändern (53) begrenzt wird, wobei diese Rille einen freien Rand der Zierblende (6) aufnimmt, wobei die Umfangsränder (53) sich in der zur Innenseite (22) des Karosserieteils (2) entgegengesetzten Richtung durch Außenwände (55) verlängern, die sich im Wesentlichen lotrecht zur Innenseite (22) des Karosserieteils (2) erstrecken.

2. Anordnung nach Anspruch 1, **dadurch gekennzeichnet, dass** die Einführrichtung (F) des mittleren Nockens (51) des Trägers (5) in die Aufnahme der Zierblende (6) um einen Winkel zwischen 30° und 60° bezüglich der Innenseite (22) des Karosserieteils (2) geneigt ist, auf der die Umfangsränder (53) des Trägers (5) in Kontakt zusammenwirken.

3. Anordnung nach einem der vorhergehenden Ansprüche, **dadurch gekennzeichnet, dass** das Funktionsorgan (1) eine Kamera ist.

4. Anordnung nach einem der vorhergehenden Ansprüche, **dadurch gekennzeichnet, dass** die Zierblende (6) und der Träger (5) Bauteile aus Kunststoff sind.

5. Anordnung nach einem der vorhergehenden Ansprüche, **dadurch gekennzeichnet, dass** das Karosserieteil (2) ein Stoßfänger eines Kraftfahrzeugs ist, insbesondere ein hinterer Stoßfänger.

6. Kraftfahrzeug, **dadurch gekennzeichnet, dass** es eine Anordnung nach einem der vorhergehenden Ansprüche enthält.

## Claims

1. Arrangement for mounting a functional component (1) on a motor vehicle bodywork element (2), comprising a trim (6) provided with an outer flange (63) bearing against an outer face (21) of the bodywork element (2), the arrangement also comprising a support (5) to which the functional component (1) is fixed, the support (5) being clipped to the trim (6), the support (5) comprising a central boss (51) to which the functional component (1) is fixed, this boss (51) being introduced into a housing of the trim (6) so as to position the functional component (1) opposite an opening formed in an end wall (62) of the trim (6), the support (5) also comprising a dished formation (52) inside which the boss (51) is located, peripheral edges (53) of the dished formation (52) being extended forward to contact and interact with an inner face (22) of the bodywork element (2) **characterized in that** the trim (6) is clipped onto the bodywork element (2) and the support (5) comprises a groove delimited internally by the central boss (51) and externally by the peripheral edges (53), this groove receiving a free edge of the trim (6), the peripheral edges (53) being prolonged in the opposite direction from the inner face (22) of the bodywork element (2) by outer walls (55) extending substantially perpendicularly to the inner face (22) of the bodywork element (2).

2. Arrangement according to Claim 1, **characterized in that** the direction of insertion (F) of the central boss (51) of the support (5) into the housing of the trim (6) is inclined at an angle of between 30° and 60° to the inner face (22) of the bodywork element (2) with which the peripheral edges (53) of the support (5) come into contact and interact.

3. Arrangement according to either of the preceding claims, **characterized in that** the functional component (1) is a camera.

4. Arrangement according to any of the preceding claims, **characterized in that** the trim (6) and the support (5) are parts made of plastic material.

5. Arrangement according to any of the preceding claims, **characterized in that** the bodywork element (2) is a fascia of a motor vehicle, notably a rear fascia.

6. Motor vehicle, **characterized in that** it comprises an arrangement according to any of the preceding claims.
